# EUROPEAN PATENT APPLICATION

(11) **EP 1 300 757 A1**
(43) Date of publication of application: **09.04.2003**
(21) Application number: 01123243.6
(22) Date of filing: 02.10.2001
(51) Int. Cl.: G06F 9/42

(54) **Shareable installation hierarchies**

(71) Applicant: Sun Microsystems, Inc., Palo Alto, California 94303 (US)
(72) Inventor: Ramme, Kay P., 21224 Rosengarten (DE)
(74) Representative: HOFFMANN - EITLE

(57) **Abstract**

Data storage unit and method for shareable installation hierarchies, wherein a plurality of directory partitions are arranged to store installed software components of application programs or operation systems. Shared use of software components is enabled through the use of directory links, enabling access from a software component at a first directory partition to a software component at a second directory partition. The directory links may be stored in association with a directory partition, and maintain information of a dependent directory partition, such as an address or path in a directory tree.

## Description

The present application relates to data storage means with shareable installation hierarchies and a corresponding method.

### Background Art

Data processing devices are employed in a growing number of fields. In virtually any area of personal and office environments, computerized applications take over tasks and provide services to a user. For example, computerized applications can be widely found in the field of text processing applications, graphics applications and other office applications. Further, applications are available for performing banking transactions, retrieving and presenting information, providing communications between users and similar, and including operating systems.

Such applications become more and more sophisticated in presenting information, provision of services and interaction. It is even possible, that different computerized applications may also interact with one another so that very large software systems may be created. The above applications may be executed either on a single data processing device or involve multiple data processing devices, which may be interconnected by direct lines or which may communicate via networks, such as packet switched communication networks.

Further, instead of a single piece of code, the above applications generally consist of a plurality of modules or components, which interact to provide a given functionality. For example, software code of an operating system of a data processing device or system may consist of a very large number of components, in order to facilitate maintenance and updating operations of individual components.

An application or component of an application, after being encoded by a programmer, will usually be implemented on the data processing device by compiling the respective software code and storing the resulting executable code in a data storage unit of the data processing device or system. If a large number of components is present, a large number of partitions of executable code may be generated and stored.

In general, software components of an application or group of applications, for example in case of an operating system of a data processing device, are installed in such a way that they can refer to one another, e.g. individual components are enabled to make a call to another software component during the execution of an application program or similar, transfer data or process data or similar. To facilitate such mutual accesses between software components, software components are generally stored in the same space. For example, a first application with all associated software components may be stored in a first region of a data storage unit, whereas a second application with associated software components will be stored in a second region of the data storage unit.

However, in this case, since different applications or modules of an application or operating system partially use identical software components, e.g. for input/output operations, display operations and similar, these software components will be replicated in different regions of the data storage unit, e.g. a copy of the software components for each such application. As a result, redundancy of the installed software will be increased and available memory space consumed.

Further, if such identical software components, installed multiple times for multiple application programs, need to be updated, for example if an input/output procedure is modified or display characteristics are changed, the corresponding software components have to be modified in association with each application program. This increases a complexity of an update operation and thus increases costs.

### Summary of the Invention

It is therefore desirable to provide installed software components which can be conveniently shared by different applications.

According to an example, a data storage unit with shareable installation hierarchies includes a plurality of directory partitions, comprising a first directory partition and a second directory partition, each of the directory partitions for storing data related to installed software components; and wherein a directory link to the second directory partition is stored in association with the first directory partition, for enabling access to data related to installed software components using the first directory link. Accordingly, installed software components can be accessed through the directory link, avoiding the need to replicate software components in different directory partitions. Instead of replicating a software component stored in one directory partition in another directory partition, a corresponding link between the directory partitions can be stored in association with the originating directory partition.

Advantageously, the first directory link may be stored within the first directory partition, referring to the second directory partition as a dependent directory. Thus, if for example a software component cannot be identified in a directory partition, the directory link may be identified and the linked directory partition can be used for obtaining access to the required software component. By storing the directory link within the first directory partition, access to the link may be achieved directly and without search or lookup operations regarding the directory link, avoiding an increase of a system load.

The first directory link may include address information of the second directory partition, and identifying information with regard to the software components accessible through the directory link, for facilitating access to the second directory partition using the directory link. If information on the software components present at the linked directory partition is available, a software component can be located beforehand, without actually performing an access operation.

Furthermore, the first directory link may be constituted by a path in a directory tree to further facilitate access to the second directory link. Still further, the first directory link may be constituted by a link file stored in association with the first directory partition. Thus, the directory link may be easily accessed and modified, for example if a software component is relocated and associated directory links need to be changed.

A second directory link to a third directory partition may be stored in association with the second directory partition and the data related to installed software components may be accessed through the second directory link. Accordingly, access to a software component may be enabled through a concatenation of accesses to directory partitions through directory links. Further, for example if a software component is relocated to another directory partition, instead of modifying all directory links pointing to the software component, a further directory link could be introduced, leading to the new location of the software component from the previous directory partition.

A directory partition may constitute a user directory partition for storing user software components, wherein the user directory partition may have stored in association therewith a directory link enabling access to another directory partition; and including a unit for inhibiting access to the user directory partition through a directory link. Accordingly, privacy of user directory partitions can be enhanced by allowing access from a user directory partition to other directory partitions using directory links while inhibiting access from a directory partition to a user directory partition.

The data storage unit may include a plurality of remote storage devices cooperating via communication links, each storage device including at least one directory partition. Accordingly, the data storage unit can be arranged in a distributed fashion, with storage devices communicating over communication links such as dedicated communication links or networks.

The data storage unit may form part of a client unit arranged for accessing directory partitions at a server unit over a network using a directory link. Thus, directory partitions may be accessed in a client and server system over a communication network such as the Internet. Likewise, the data storage unit may form part of a server unit arranged for allowing access from a client unit to directory partitions at the server unit over a network using a directory link.

According to another example, a method for accessing software components in a data storage unit including a plurality of directory partitions, each of the directory partitions storing data related to install software components, comprises: receiving a call for a software component at a first directory partition; reading a first directory link to a second directory partition, the first directory link being stored in association with the first directory partition; and accessing data related to install software components using the first directory link.

Further advantageous embodiments of the application are disclosed in further dependent claims.

### Brief Description of the Drawings

In the drawings like elements are denoted by like reference numerals.
- Fig. 1: shows a data storage unit with shareable installation hierarchies according to a first embodiment of the application;
- Fig. 2: shows another data storage unit with shareable installation hierarchies according to another embodiment of the application;
- Fig. 3: shows a data storage unit with shareable installation hierarchies according to another embodiment of the application;
- Fig. 4: shows operations for accessing software components in a data storage unit according to an embodiment of the application; and
- Fig. 5: shows a data storage unit with shareable installation hierarchies according to another embodiment of the application.

### Detailed Description of Preferred Embodiments

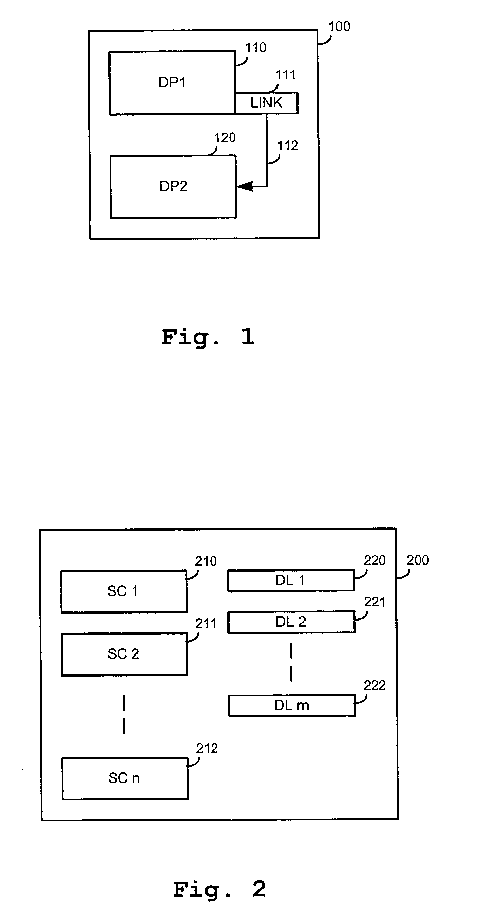

In the following a first embodiment of the application will be described with respect to Fig. 1.

Fig. 1 illustrates a data storage unit with shareable installation hierarchies according to an embodiment of the application.

Fig. 1 illustrates a data storage unit with shareable installation hierarchies 100 including a first directory partition 110 and a second directory partition 120, each of the directory partitions for storing data related to installed software components; and wherein a first directory link 111 to the second directory partition 120 is stored in association with the first directory partition 110, for enabling access to data related to installed software components using the first directory link.

In the embodiment of Fig. 1, the second directory partition 120 is accessible from the first directory partition through the directory link 111, as illustrated by the arrow 112. Thus, if for example a software component installed at the first directory partition requires a software component which is available at the second directory partition 120, this software component can be accessed through the directory link 111, including retrieving the software component, transferring data, processing operations and similar. Accordingly, it is not necessary to replicate all software components in all directory partitions of the data storage unit, software components may be provided only once in a specific directory partition and linked to all other directory partitions possibly requiring such software components.

The first directory link may be stored within the first directory partition, in order to avoid computationally intensive lookup operations in order to identify the directory link at another location. If for example a software component cannot be located within a particular directory partition, an application program could effect detection of all directory links stored within the directory partition and proceed to locate the desired software component through the directory links.

However, it is also possible that the directory links are stored remote from the corresponding directory partitions, for example in a data base of directory links, where they can be accessed from the directory link searching for a particular software component not located at that directory partition.

Further, the first directory link may include address information of the second directory partition and identifying information of the directory components accessible through the directory link. For example, information could be maintained in association with the directory link, such as which software components or type of data is accessible through the directory link, or which functionality can be invoked using the directory link. This information could be stored in a list of software components or available functions installed at the second directory partition and/or further information on directory links available at the second directory partition.

Alternatively, it is also possible that the identifying information on the software components accessible through the directory link is maintained at a central location, to be obtained in a lookup operation.

By providing address information of the second directory partition in association with the directory link, a direct access to the second directory partition can be assured.

Further, the first directory link may be constituted by a path in a directory tree, for example a directory tree of a file system storing a large number of installed software components and possibly further information relating to an operating system or similar. However, it is also possible that the first directory link is constituted by a link file stored in association with the first directory partition. This link file may conveniently be maintained at the directory partition, can be reviewed by a user or system administrator and may store all necessary link information such as address information of the second directory partition and any information, if provided, of the software components available at the second directory partition and/or further directory links to further directory partitions, including software components located at such further dependent directory partitions. The link file could be conveniently edited by the user or system administrator and modified, if installed software components are relocated within the data storage unit.

The second directory partition 120 may include a second directory link (not shown in Fig. 1) pointing to a third directory partition, and data related to required installed software components may be provided at the third directory partition, to be accessed through the second directory link. Further such further stages of linked directory partitions are possible, such that access to an installed software component may be obtained through a plurality of directory links.

Allowing access to a required installed software component through multiple directory links provides a high degree of flexibility. For example, if software components are relocated from one directory partition to another directory partition, or when removing a directory partition, e.g. when updating or modifying an operating system, updating all directory links to a specific directory partition can be a time consuming process. Further, depending on availability of information on directory links listing a particular modified or deleted directory partition as dependent directory partition, it may even be impossible to update all directory links. This may lead to problems during operation, as it may become impossible to locate moved software components from other directory partitions.

To avoid these problems, according to the present embodiment, if software components are relocated from a first directory partition to a second directory partition, there may be included an additional directory link into the first directory partition to the second directory partition. Thus, any application program accessing the first directory partition regarding software components originally stored at this directory partition will be redirected through the directory link to the second directory partition now storing the software component. Thus, complicated updating operation of a potentially large number of directory links can be avoided.

In the following further examples of the elements of the data storage unit illustrated in Fig. 1 will be outlined in further detail. It is noted that the following description provides examples only and should not be understood as limiting.

In Fig. 1, the first and second directory partitions 110 and 120 may be constituted by any type of computer memory or data storage devices such as a RAM, magnetic or optical storage. For example ,the first and second directory partitions may be constituted by partitions of a memory subdivided into a number of directory partitions or may be constituted by separate memory units connected to one another to exchange data. A directory partition may also be a simulated file folder on a memory unit, constituting indexes to files, such as installed software components, which are stored in the file folders which, however, may physically be scattered on the memory unit. Thus, a directory partition may be a physically separate unit or may be a virtual concatenation of tracks or other units in a memory.

The data storage unit 100 illustrated in Fig. 1 may itself be a single device, such as a single optical, magnetic or other data storage unit, or may be constituted by a collection of such devices. Further, the data storage unit may be included into a single data processing device, such as a general purpose data processing device, a mobile computing device, such as a mobile data organizer or mobile communication unit, including a mobile telephone. Further, the data storage unit if formed by a plurality of single units, may be distributed onto a plurality of data processing devices. The individual data processing devices may be arranged in a network, such as a packet switched network, including a local area network or the Internet, or may be connected by dedicated communication links.

Each directory partition may be arranged to store data related to installed software components of any type of application, including operation systems, user applications such as text processing applications, spread sheet applications, communication applications and similar. It is also possible that the data storage unit forms part of a server and client system, wherein the data storage unit is arranged at the server unit and can be accessed through a plurality of client units, which may access the server unit from remote locations. The client units could be enabled to use resources of the server unit, e.g., of application programs, the software components of which are stored in the directory partitions.

A software component can be constituted by a collection of instructions to make a data processing device to carry out a particular function and may be present in a form which is directly executable by a data processing device. For example, the data of the installed software components could be produced by a compiler processing source code written by a programmer. Further, a directory partition could store software components in a form which requires an interpreter for execution.

Today's application programs may include a potentially large number of software components, wherein the execution of one software component may require a call to another software component. Thus, software components related to an application are usually stored in a defined area of a data storage device, in order to allow one software component to make a call or access another software component. Further, in today's computer systems it is also possible that different applications partially rely on the same software components for example for input or output operations, display operations on a monitor and similar.

According to the above, a first application program could store software components related to the first application program in a first directory partition, while a second directory partition stores software components related to a second application program. Commonly used software components could be stored in one of the first and second directory partitions or alternatively a third directory partition.

According to the present embodiment, in order to avoid a redundant storage of software components utilized by both, the first application program and the second application program in the first and second directory partition, a directory link between the directory partitions is provided. For example, commonly used software components such as for input/output or certain mathematical operations, could be stored in one of the first and second directory partitions or could be stored in yet another directory partition, while the first and/or second directory partition stores a directory link pointing to the directory partition actually storing the commonly used software components. Obviously, if the commonly used software components are stored in the second directory partition, the first directory partition will store a directory link to the second directory partition, or likewise, if the commonly used software components are stored in a third directory partition, both, the first and second directory partition, will store a directory link to the third directory partition.

The directory link can in general by any kind of link information allowing access from one directory partition to another directory partition. For example, the directory link could include address information of the directory partition actually storing a desired software component, enabling a data processing unit to follow the link for making a call from one software component stored in one directory partition to another software component stored at another directory partition. This link information may also be constituted by a path in a directory tree. However, the link does not have to be a real link, such as a Unix like link, it can also be a file with a directory specification stored in association with the directory partition.

The link file may include all necessary information for accessing another software component, i.e. may include information on a dependent directory partition and optionally, may include information on software components available at the dependent directory partition. A user or system administrator may conveniently edit and update or modify the link file, if required. For example, the link information could thus be stored as ASCII information which can be edited using a standard text processing application. However, it is also possible that the link information of the link file is stored in a machine executable format, and that changes to the link file are effected with a specific application program, enabling a user to modify or update the link information.

While the directory link file or the directory link in any format may be stored directly at the directory partition, it is also possible that the directory link is maintained at another location, such as a link directory or similar. In this case, if a software component needs to make a call to another software component which is not located at the same directory partition, the link directory could be investigated in order to identify a directory partition storing the required software component.

Access from one directory partition to another directory partition can then be gained through any kind of communication link, including an internal connection of a data processing device, a dedicated communication path, or a network connection.

Further, a directory partition may include a plurality of directory links to dependent directory partitions.

In the following example of an implementation of the present embodiment in connection with the SUN ONE webtop installation will be outlined. SUN ONE webtop allows users operating client devices to access resources at a server unit through communication networks or communication links. For example, a user could access a text processing application at the server unit through a client computer remotely logged into the server unit. The client unit would then be used to control the editing of application, editing a document, which may, for example, be located at the server unit. Screen contents for controlling the application could be provided to the client unit for local display.

A data storage unit of the SUN ONE webtop installation may include a plurality of directory partitions storing software components of the various partitions of the installation.

A possible SUN ONE webtop installation using the link concept of the present example may look like outlined in the following.

In this example, -> corresponds to a directory link to another directory partition.

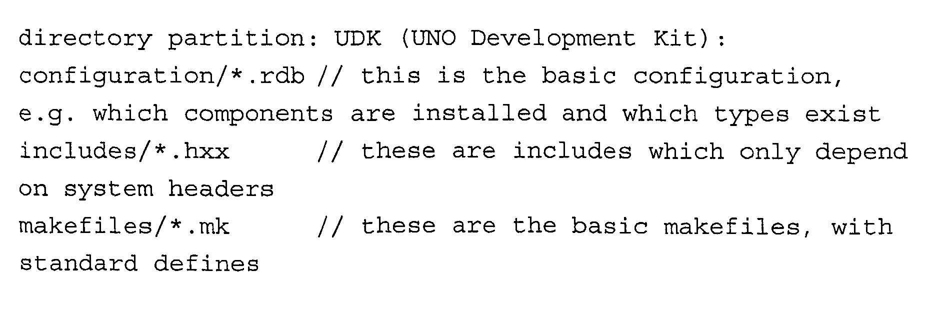

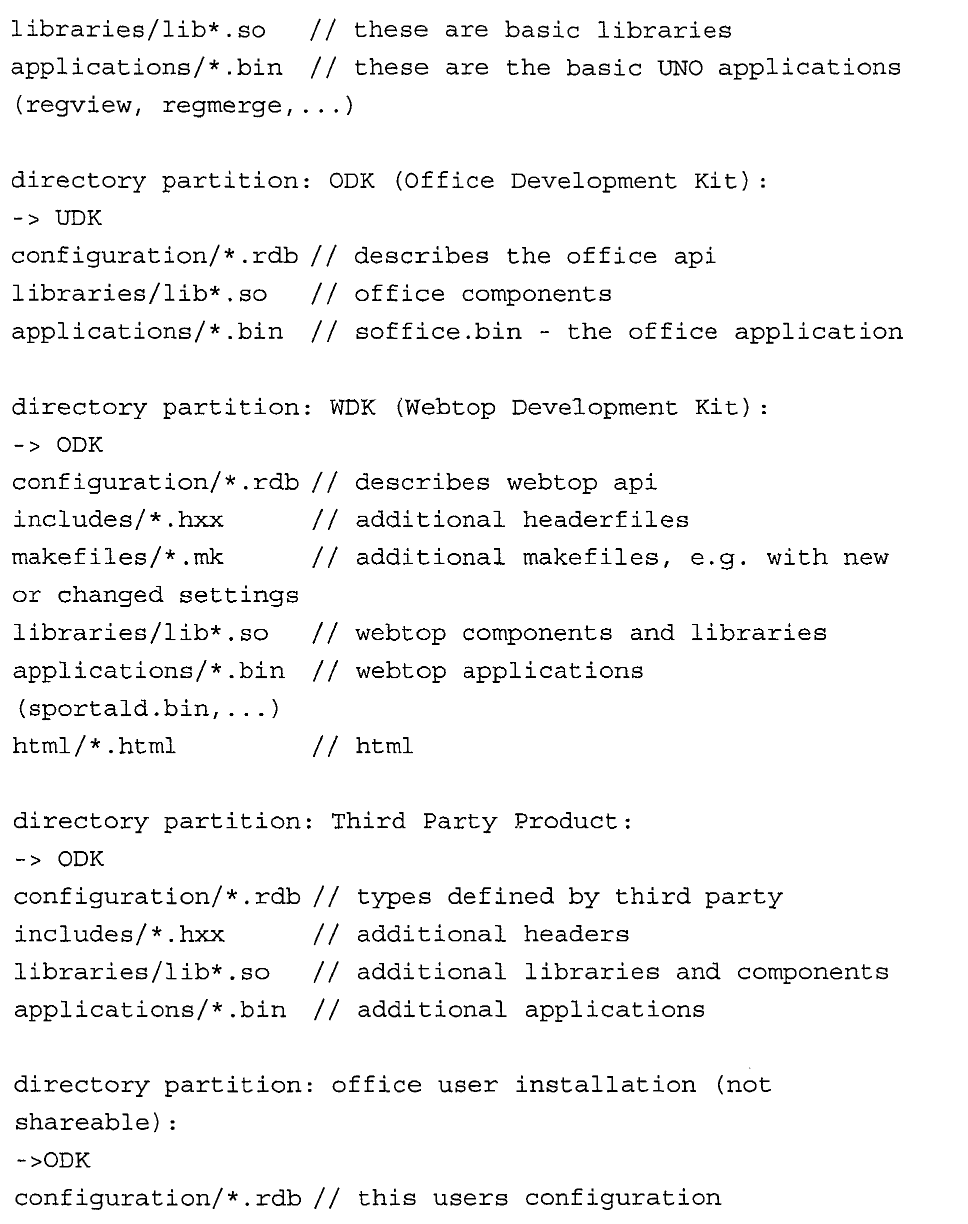

As it can be seen from the above example, each directory partition contains a partition of the software components needed for the SUN ONE webtop installation. In order to avoid replication of components for smooth operation of the system, links to the other components residing on the other directory partitions are provided. The directory partitions, if required, i.e., if access to other software components from this directory partition is required, include respective links to the other directory partitions. For example, the directory partition ODK includes a directory link to the directory partition UDK, likewise the directory partition WDK includes a directory link to the directory partition ODK. In operation, if for example software components at the directory partition WDK relating to the SUN ONE webtop development kit are invoked, it may be required to access software components describing the office api (application program interface). As these software components are stored at the directory partition ODK and since a directory link to the directory partition ODK is stored at the directory partition WDK, the software components describing the office application program interface can be accessed, leading to a smooth execution of the software components at the webtop development kit. Similarly, or in addition thereto, if the software components describing the office application program interface require software components of the directory partition UDK, those software components can be accessed through the corresponding link to the directory partition UDK stored at the directory partition ODK.

During operation, if a particular software component cannot be identified at a current directory partition, a controlling data processing unit executing the software components or any other unit could be instructed to search for any directory links stored in or in association with the current directory partition. Then, if directory links are identified, linked directory partitions could be accessed in order to obtain the required software components. This could be done in a sequential manner, i.e., a first identified directory link could be used to access a dependent directory partition in search for a software component, and then further directory links could be considered.

If information on the software components at a linked directory partition, i.e. a directory partition through a directory link, is maintained in association with the directory link, the directory link could first be analyzed in order to identify whether the linked directory partition should actually be accessed or not. Maintaining information on software components available at link directory partition avoids performing actual access operations.

It is noted that the above described operations for controlling the data storage unit may at least partially be realized as software or hardware. I.e., controls can be carried out using dedicated hardware or a correspondingly programmed data processing device.

Further, it is noted that a computer-readable medium may be provided having a program embodied thereon, where the program is to make a computer or system of data processing devices execute functions or operations of the features and elements of the above described examples. A computer-readable medium can be a magnetic or optical or other tangible medium on which a program is recorded, but can also be a signal, e.g. analog or digital, electromagnetic or optical, in which the program is embodied for transmission. Further, a computer program product may be provided comprising the computer-readable medium.

In the following a further embodiment of the application will be described with respect to Fig. 2.

Fig. 2 shows a data storage unit according to another embodiment of the application, particularly outlining elements of a directory partition.

Fig. 2 shows a directory partition denoted 200 including a plurality of software components 210, 211, 212. While only three software components are shown, it is understood that an arbitrary number of software components can be provided. Further, the directory partition 200 shown in Fig. 2 includes a plurality of directory links 220, 221 and 222. Again, an arbitrary number of directory links could be provided.

As outlined before, the directory partition 200 may be constituted by a contiguous physical space on a data storage device, such as a particular defined partition on a recording medium. Further, it is possible that the directory partition is constituted by a concatenation of disjoint partitions of a data storage device. Still further, it is possible that the directory partition is constituted by a data storage device, such as a hard-drive, or other recording device, arranged for communicating with other directory partitions located on other data storage devices.

The software components 210-212 shown in Fig. 2 may essentially relate to any application program or operation system, as for example the operation system of the SUN ONE webtop installation outlined with respect to Fig. 1. For example, directory partition 200 shown in Fig. 2 may store software components related to a particular type or group of functionalities of a larger system.

Still further, the directory links 220, 221 and 222 shown in Fig. 2 provide links to further dependent directory partitions storing further software components which may have to be accessed from the software components of the directory partition 200. The links 220-222 may be stored within the directory partitions or may be stored at a separate locations, for example in a directory file storing information in association with some or all of the directory links of the directory partition 200. Each directory link could include information for accessing a dependent directory partition, such as address information, a path in a directory tree or similar.

Optionally, the directory links may include information on software components available at the respectively linked directory partitions. If information on software components is available with the directory links, the directory links could be analyzed in order to identify a directory partition storing a desired software component. If such a software component cannot be identified in the directory partition, such as directory partition 200 or any of the directory links, the respective dependent directory partitions can then nevertheless be accessed, in order to identify further directory links at the dependent directory partitions in order to search for the desired software component using the directory links at the dependent directory partition. In a further search stage, if a desired software component can still not be located, further dependent directory partitions could be identified and accessed in search of a desired software component.

While it is possible that directory links and software components are handled on a physical level, i.e. in the physical storage space related to a directory partition, it is also possible that accesses from one software component through a directory link to software components at another directory partition is managed on a higher system layer, e.g. a system layer maintaining information on directory partitions (e.g. virtual directory partitions or physical directory partitions) and corresponding directory links. Thus, a control layer could maintain information on physical storage spaces defining a directory partition and information on associated directory links to further directory partitions in order to be able to handle an access from one directory partition to another directory partition through a directory link.

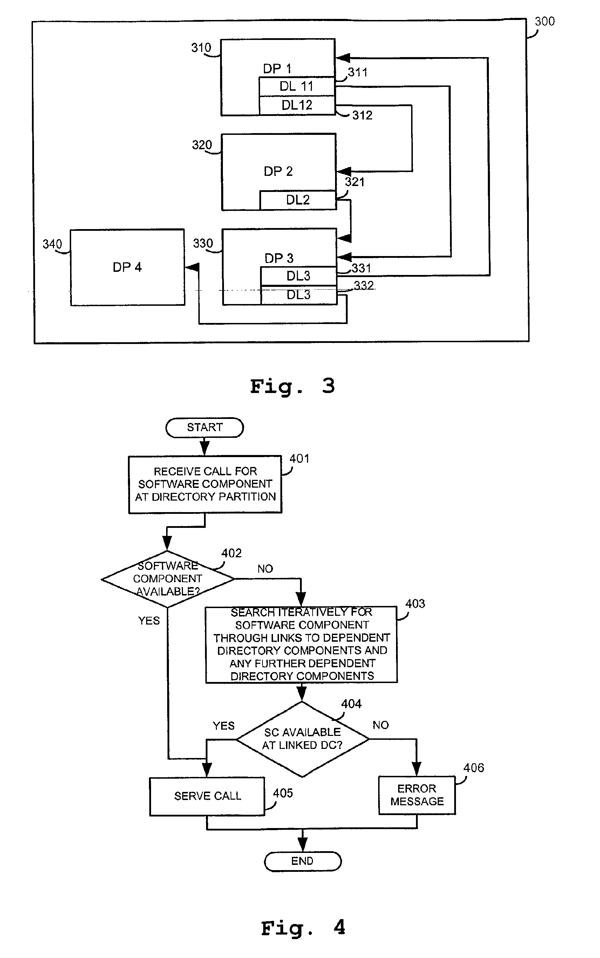

In the following a further embodiment of the application will be described with respect to Fig. 3.

Fig. 3 shows a data storage unit according to another embodiment of the application, particularly outlining an example of possible dependencies through directory links among a plurality of directory partitions.

Fig. 3 shows a directory partition 300, which may be similar to the directory partitions outlined with respect to previous embodiments.

The directory partition 300 includes four directory partitions 310, 320, 330 and 340, even though any number of directory partitions may be provided. Each of the directory partitions 310, 320, 330 and 340 is arranged to store installed software components, e.g. compiled source code, code for further processing through an interpreter or similar of one or a plurality of arbitrary application programs.

Further, it is assumed that directory partition 310 includes two directory links 311 and 312, pointing to dependent directory partitions. In the present case, it is assumed that directory link 311 points to the third directory partition 330 and that the directory link 312 points to the second directory partition 320. Thus, software components located at the first directory partition 310 may be enabled to make calls or transfer data or retrieve data or similar from software components located at the second directory partition 320 and third directory partition 330.

The directory links enable a linking of the dependent software components or execution of any provided data, which are reachable through the directory link.

Further, in the example of Fig. 3 it is assumed that the second directory partition 320 includes a directory link 321, linking the third directory partition 330. Still further, in the example of Fig. 3 it is assumed that the third directory partition 330 includes a directory link 331 linking the first directory partition 310.

Accordingly, it is possible that accesses from software components to other software components on other directory partition are carried out through one or a plurality of directory links, which may lead to a constellation, as shown in Fig. 3, wherein a software component at the first directory partition 310 accesses a software component at the second directory partition 320, which in turn accesses a software component at the third directory partition 330 through the directory link 321, and that this software component at the directory partition 330 accesses through link 331 a software component again at the first directory partition 310.

It is noted that the directory links 311, 312, 321 and 331 may be stored in the directory partitions or in association with the respective directory partitions.

In the example of Fig. 3, if the software components of the one or plurality of application programs stored in the directory partitions shown in Fig. 3 are updated or modified, or if further software components are introduced, it may happen that a software component located at the third directory partition 330 is relocated to the fourth directory partition 340 (or any other directory partition).

In order to still enable software components at the first and second directory partition 310 and 320 to still access the relocated software components now at directory partition 340, the respective links 311 at the first directory partition 310 and the directory link 321 at the directory partition 320 can be modified to now list the fourth directory partition 340 as the dependent directory partition. In this case two access and update operations are required. If a large number of directory partitions and links is present, this operation may, however, involve a substantially larger number of access and update operations, leading to a very time consuming process.

Therefore, instead of modifying the directory link 311 and 321, a further directory link 332 can be included into the third directory partition 330. This directory link 332 now lists the fourth directory partition maintaining the relocated software components as dependent directory partition. A request to access to a software component originally located at the third directory partition 330 can now be redirected to the fourth directory partition 340. Thus, only a single further link needs to be included in order to maintain accessibility of the software components relocated to the fourth directory partition 340.

In operation, a software component at the directory partition 310, for example, could still access the third directory partition 330, in order to determine that the software components can now be accessed through the directory link 332 at the fourth directory partition 340.

While according to the second option the update operation is fairly straightforward and simple, i.e., by including another directory link, the actual access to a linked software component involves further steps, which may lead to a time lag. Therefore, if software components of a directory partition are to be relocated, where the directory partition is only listed in a few directory links as a dependent directory partition, the respective links could be updated, while if a large number of directory partitions or if not all directory partitions are known, which list this directory partition as a dependent directory partition, a further link such as link 332 could be introduced.

In the following a further embodiment of the application will be described with respect to Fig. 4.

Fig. 4 outlines operations of a method for accessing software components in a storage unit according to another embodiment of the application. Fig. 4 particularly outlines operations of a strategy for accessing linked software components.

The operations outlined in Fig. 4 may be carried out by a central processing unit of the data storage unit of one of the previous embodiments, however, Fig. 4 is not limited thereto. The operations could also be carried out by any other control unit executing instructions related to software components stored in directory partitions.

In a first operation 401 a call for a software component in association with a particular directory partition is received. This call may include any instruction to execute a software component at this directory partition.

In an operation 402 it is determined, whether the desired software component is available at the specified directory partition.

If in operation 402 the decision is "YES", i.e., if the software component is available at the directory partition, the call is served in an operation 405, for example as known in the art. Serving the call may include performing an operation, transferring data, invoking further software component and similar.

If in operation 402 the decision is "NO", indicating that the software component is not available at the directory partition, in an operation 403 a control unit may be instructed to search iteratively for the software component through links to dependent directory components and any further dependent directory components.

This may include an identification of any directory links stored in association with the directory partition in question and analyzing the directory partitions. Any dependent directory partitions may be sequentially accessed trying to identify the desired software component. If the desired software component cannot be identified at any dependent directory partition, directory links at the dependent directory partitions could be identified and further dependent directory partitions could be accessed in search for the desired software component.

Alternatively, operation 403 may involve identifying a first directory link at the directory partition in question, accessing the dependent directory partition in search for the desired software component. If the software component cannot be located at this dependent directory partition a first directory link at the dependent directory partition could be identified and a still further dependent directory partition could be accessed. These operations could be repeated until a last linked directory partition is accessed. Thereafter, a second directory link at the original directory partition could be identified and analyzed and the above operations could be retrieved.

Accordingly, a search for a software component may involve a search on a level-by-level basis, i.e., always moving down to one further layer of directory partitions. Further, the search for a software component could involve "vertical" sequential investigation of all directory partitions which can be accessed through each one initial directory link.

Thereafter, in an operation 404 it is determined whether the desired software component is available at any linked directory component. If in operation 404 the decision is "YES", i.e. the software component is available, in the operation 405, the call is served.

If in operation 404 the decision is "NO", indicating that the software component is not available at any of the directory partitions, an error message is presented in an operation 406.

Thereafter, the flow of operation ends.

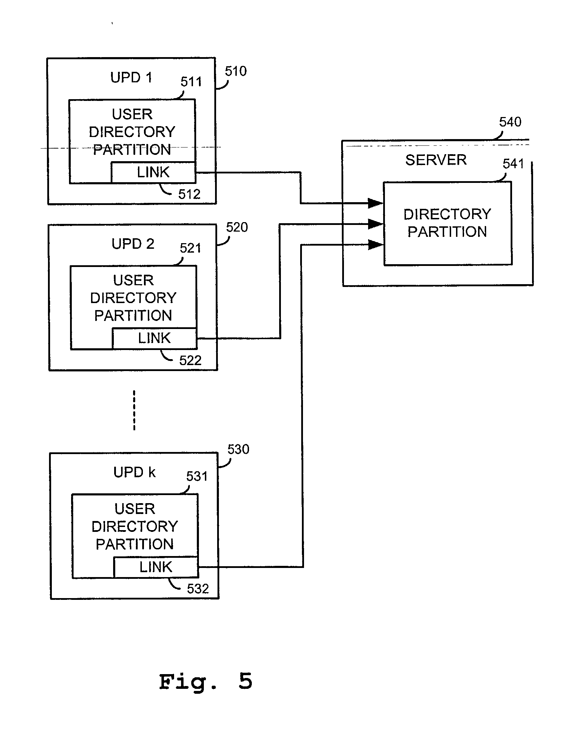

In the following a further embodiment of the application will be described with respect to Fig. 5.

Fig. 5 shows a data storage unit according to another embodiment of the application, particularly outlining a server and client example.

Fig. 5 shows three user processing devices 510, 520 and 530, respectively including user directory partitions 511, 521 and 531.

Further, Fig. 5 shows a server unit 540, including a server directory partition 541.

Still further, each user directory partition includes a directory link to the server directory partition 541, i.e., user directory partition 511 includes a directory link 512 to the server directory partition 511, user directory partition 521 includes a corresponding link 522 and user directory partition 531 includes a link 532 to the directory partition 541. While in the example of Fig. 5 three user processing devices are shown, it is understood that an arbitrary number of user processing devices can be provided.

The user directory partitions 511, 521 and 531 may be maintained in association with individual users, either in connection with user processing devices 510, 520 and 530, or in any other environment. The user directory partitions of the example of Fig. 5 may include user related software components and other information which should not be accessible from third parties. Thus, while a user directory partition is provided for storing a directory link enabling access to further directory partitions, such as the server directory partition 541 shown in Fig. 5, the user directory partitions cannot be accessed through directory links from another directory partition. Thus, the information maintained in the user directory partitions is maintained private, access from the outside from the user directory partition through a directory link is not possible.

While the user processing devices and the server unit may be arranged on a single system including a single data processing device, the user processing device and the server unit may be part of a distributed system wherein the user processing devices form client units and the server unit may be accessed from the client unit over a network using the directory links.

Access to a user directory partition through a directory link could be prevented by providing authorization information in association with directory partitions which is investigated before allowing access to that directory partition through a directory link. This access information could be constituted by a flag, which, if enabled, allows access from other directory partitions through directory links, and when disabled, does not allow access from other directory partitions through directory links.

Accordingly, directory links may enable not only access through internal communication paths such as accesses within a data storage device, e.g. through a system bus or similar, but also enable access between separate devices over communication links, including communication networks. In this case accesses through the directory links may involve executing protocols for enabling a communication between the remote devices, as known in the art.

According to a further example, a data storage unit may have the following components.
1). Data storage unit with sharable installation hierarchies comprising
   a plurality of directory partitions including a first directory partition and a second directory partition,
   code sections containing instructions to store data related to installed software components in each of the directory partitions; and
   code sections containing instructions to store a first directory link to the second directory partition in association with the first directory partition, to enable access to data related to installed software components using the first directory link.
2). Data storage unit of 1), including a code section containing instructions to store the first directory link within the first directory partition.
3). Data storage unit of 1), including a code section containing instructions to store a second directory link to a third directory partition in association with the second directory partition and a code section containing instructions to access the data related to installed software components through the second directory link.
4). Data storage unit of 1), including
   a user directory partition for storing a directory link enabling access to another directory partition; and
   including a code section containing instructions to inhibit access to the user directory partition through a directory link.
5). Data storage unit of 1), including a plurality of remote storage devices including code sections containing instructions to cooperating via communication links, each storage device including at least one directory partition.
6). Data storage unit of 1), including a code section containing instructions to enable access to directory partitions at a server unit over a network using a directory link.

## Claims

1. Data storage unit with sharable installation hierarchies comprising
a plurality of directory partitions including a first directory partition and a second directory partition, each of the directory partitions for storing data related to installed software components; and
wherein a first directory link to the second directory partition is stored in association with the first directory partition, for enabling access to data related to installed software components using the first directory link.

2. Data storage unit of claim 1, wherein the first directory link is stored within the first directory partition.

3. Data storage unit of at least one of the preceding claims, wherein the first directory link includes address information of the second directory partition and identifying information on the software components accessible through the directory link.

4. Data storage unit of at least one of the preceding claims, wherein the first directory link is constituted by a path in a directory tree.

5. Data storage unit of at least one of the preceding claims, wherein the first directory link is constituted by a link file stored in association with the first directory partition.

6. Data storage unit of at least one of the preceding claims, wherein a second directory link to a third directory partition is stored in association with the second directory partition and the data related to installed software components are accessed through the second directory link.

7. Data storage unit of at least one of the preceding claims, including
a user directory partition for storing a directory link enabling access to another directory partition; and
wherein the data storage unit is arranged to inhibit access to the user directory partition through a directory link.

8. Data storage unit of at least one of the preceding claims, including a plurality of remote storage devices cooperating via communication links, each storage device including at least one directory partition.

9. Data storage unit of at least one of the preceding claims forming part of a client unit arranged for accessing directory partitions at a server unit over a network using a directory link.

10. Data storage unit of at least one of the preceding claims, forming part of a server unit arranged for allowing access from a client unit to directory partitions at the server unit over a network using a directory link.

11. Method for accessing software components in a data storage unit including a plurality of directory partitions, each of the directory partitions storing data related to installed software components, comprising;
receiving a call for a software component at a first directory partition;
reading a first directory link to a second directory partition, the first directory link being stored in association with the first directory partition; and
accessing data related to installed software components using the first directory link.

12. Method for accessing software components of claim 11, wherein the first directory link is stored in the first directory partition.

13. Method for accessing software components at least of one of the claims 12 and 13, wherein the first directory link includes address information of the second directory partition and identifying information on the software components accessible through the directory link.

14. Method for accessing software components of at least one of the claims 11 to 13, wherein the first directory link is constituted by a path in a directory tree.

15. Method for accessing software components of at least one of the claims 11 to 14, wherein the first directory link is constituted by a link file stored in association with the first directory partition.

16. Method for accessing software components of at least one of the claims 11 to 15, wherein the step of accessing data related to installed software components includes;
reading a second directory link to a third directory partition, the second directory link being stored in association with the second directory partition; and
accessing the data related to installed software components through the second directory link.

17. Method for accessing software components of at least one of the claims 11 to 16, wherein
a user directory partition stores a directory link enabling access to another directory partition; and
the data storage unit is arranged to inhibit access to the user directory partition through a directory link.

18. Method for accessing software components of at least one of the claims 11 to 17, wherein the data storage unit forms part of a client unit and directory partitions at a server unit are accessed over a network using a directory link.

19. Method for accessing software components of at least one of the claims 11 to 18, wherein the data storage unit forms part of a server unit and allows access from a client unit to directory partitions at the server unit over a network using a directory link.

20. A program having instructions adapted to carry out the method of at least one of the claims 11 - 19.

21. A computer readable medium, in which a program is embodied, where the program is to make a computer execute the method of at least one of the claims 11 - 19.

22. A computer program product comprising the computer readable medium according to claim 21.
